# EUROPÄISCHE PATENTANMELDUNG

(11) **EP 1 197 938 A2**
(43) Veröffentlichungstag der Anmeldung: **17.04.2002**
(21) Anmeldenummer: 01124140.3
(22) Anmeldetag: 10.10.2001
(51) Int. Cl.: G09B 7/00

(54) **Verfahren und Vorrichtung zur Ermittlung von Kompetenz-bildenden Massnahmen**

(30) Priorität: 10.10.2000 DE 10050060
(71) Anmelder: SIEMENS AKTIENGESELLSCHAFT, 80333 München (DE)
(72) Erfinder: Leipoldt, Thilo, 80336 München (DE)

(57) **Zusammenfassung**

Mittels einer auf der Datenverarbeitungseinrichtung (DV) - z.B. eines Personal Computers - ablaufenden Anwendung (B) - z.B. eines Webbrowsers - sind unter Zugriff auf eine mit der Datenverarbeitungseinrichtung (DV) über ein IP-orientiertes Netz (IPN) verbundenen zentralen Datenverarbeitungseinrichtung (S) eine Mehrzahl von personenbezogenen Fähigkeiten auswählbar. Nach einer erfolgten Auswahl werden in Abhängigkeit der ausgewählten Fähigkeiten Datensätze mit den Fähigkeiten zugeordneten Kompetenz-bildenden Maßnahmen bereitgestellt, wobei durch einen Benutzer die bereitgestellten Kompetenz-bildenden Maßnahmen frei auswähl- und zusammenstellbar sind. Die Kompetenz-bildenden Maßnahmen (M) sind dabei in unterschiedliche Kategorien (K) eingeteilt.

## Beschreibung

In der heutigen Berufswelt steigen die Anforderungen an die berufstätigen Personen ständig an. Hierbei werden an diese Personen in Abhängigkeit der im Beruf auszuführenden Tätigkeiten unterschiedliche Anforderungen gestellt. Für eine berufliche Weiterentwicklung ist es dabei notwendig, für die Ausführung einer Tätigkeit benötigte Kompetenzen gezielt herauszufinden und weiterzuentwickeln.

Beispielsweise wurde bereits in dem Handbuch von B. Davis: "Successful Managers's Handbook - Development Suggestions for Today's Managers", Personal Decisions International, 5. Auflage, 1996, ISBN 0-938529-03-X, insbesondere der Seite 16, eine Zuordnung von persönlichen und beruflichen Fähigkeiten zu einer bestimmten beruflichen Tätigkeit vorgenommen. Aufgrund einer derartigen Zuordnung ist es einer Person individuell möglich, die für sie notwendigen Maßnahmen zum Aufbau bzw. Ausbau der geforderten beruflichen Kompetenzen zu ergreifen.

In der Regel ist es jedoch mit einem hohen Aufwand verbunden, die richtigen Maßnahmen - beispielsweise geeignete Literatur, Fortbildungskurse, Verhaltenstips, usw. - zum Aufbau der beruflichen Kompetenzen - beispielsweise von Kenntnissen, Erfahrungen und Fähigkeiten - ausfindig zu machen und aus den ermittelten Kompetenz-bildenden Maßnahmen einen sinnvollen persönlichen Entwicklungsleitfaden zusammenzustellen.

Der vorliegenden Erfindung liegt daher die Aufgabe zugrunde, Maßnahmen anzugeben, durch welche der Aufwand für eine Ermittlung und sinnvolle Auswahl von geeigneten Kompetenz-bildenden Maßnahmen reduziert werden kann.

Die Lösung dieser Aufgabe erfolgt erfindungsgemäß mit den Merkmalen des Patentanspruchs 1 bzw. 5.

Ein wesentlicher Vorteil des erfindungsgemäßen Verfahrens bzw. der erfindungsgemäßen Einrichtung besteht darin, daß für einen Benutzer durch eine intelligente Benutzerführung und eine situationsabhängige Bereitstellung von an die einzelnen Fähigkeiten speziell angepaßten Auswahlmenüs eine personenindividuelle Zusammenstellung von Kompetenz-bildenden Maßnahmen komfortabel und auf einfache Weise möglich ist.

Vorteilhafte Weiterbildungen der Erfindung sind in den Unteransprüchen angegeben.

Ein Vorteil von in den Unteransprüchen definierten Ausgestaltungen der Erfindung besteht unter anderem darin, daß durch eine Nutzung eines IP-orientierten Netzes - beispielsweise des 'Internets' oder eines 'Intranets' - zur Verbindung von Datenverarbeitungseinrichtungen untereinander auf eine bereits bestehende Netzinfrastruktur zurückgegriffen werden kann.

Ein Ausführungsbeispiel der Erfindung wird im folgenden anhand der Zeichnung näher erläutert.

Dabei zeigen:
- Fig. 1:: ein Strukturbild zur schematischen Darstellung der am erfindungsgemäßen Verfahren beteiligten wesentlichen Funktionseinheiten;
- Fig. 2:: ein Browser-Fenster für eine Auswahl von personenbezogenen Fähigkeiten;
- Fig. 3:: ein Browser-Fenster für eine Auswahl von Kompetenz-bildenden Maßnahmen in Abhängigkeit einer ausgewählten Fähigkeit und einer ausgewählten Kategorie; und
- Fig. 4:: ein weiteres Browser-Fenster für eine alternative Auswahl von Kompetenz-bildenden Maßnahmen in Abhängigkeit einer ausgewählten Fähigkeit und einer ausgewählten Kategorie.

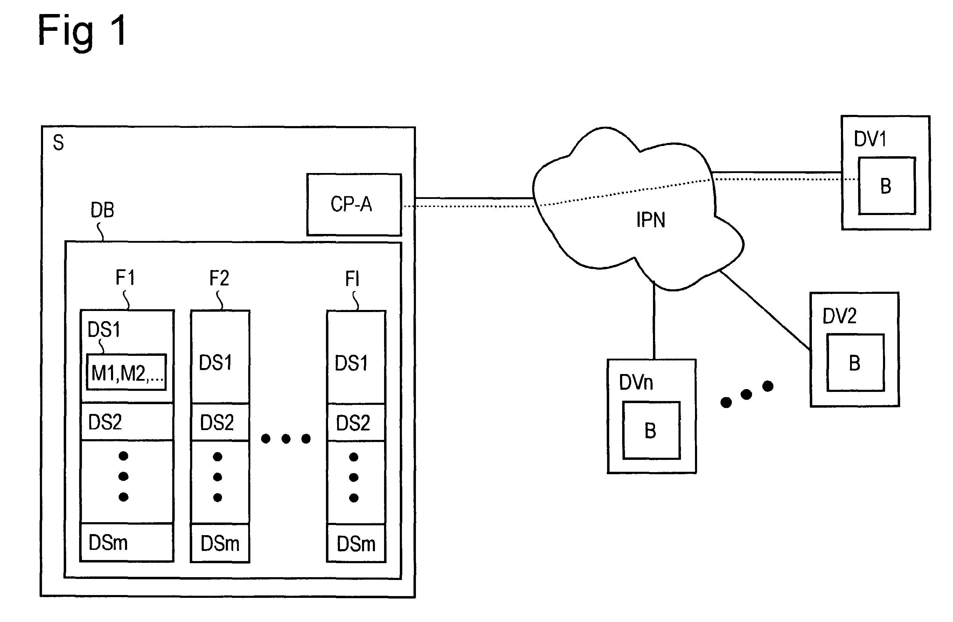

Fig. 1 zeigt ein Strukturbild zur schematischen Darstellung der am erfindungsgemäßen Verfahren beteiligten wesentlichen Funktionseinheiten. Hierbei sind lokale Datenverarbeitungseinrichtungen DV1,...,DVn - beispielsweise Personal Computer oder Workstations - über ein IP-orientiertes Netz IPN - beispielsweise das 'Internet' oder ein 'Intranet' - mit einer zentralen Datenverarbeitungseinrichtung - im folgenden als Server S bezeichnet - verbunden. Auf den lokalen Datenverarbeitungseinrichtungen DV1,...,DVn laufen jeweils erste Anwendungen B - insbesondere ein sogenannter Webbrowser - ab, wobei durch die ersten Anwendungen B jeweils über das IP-orientierte Netz IPN ein Zugriff auf eine im Server S ablaufende zweite Anwendung CP-A erfolgt (beispielhaft durch die gepunktete Linie zwischen der auf der ersten Datenverarbeitungseinrichtung DV1 ablaufenden ersten Anwendung B und der auf dem Server S ablaufenden zweiten Anwendung DP-A dargestellt). Durch die zweite Anwendung CP-A erfolgt dabei eine Steuerung der auf den Datenverarbeitungseinrichtungen DV1,...,DVn ablaufenden ersten Anwendungen B. Hierbei werden die durch eine erste Anwendung B an einer - nicht dargestellten - Anzeigeeinrichtung der entsprechenden lokalen Datenverarbeitungseinrichtung DV1,...,DVn ausgegebenen Informationen durch die zweite Anwendung CP-A auf Anfrage zur Verfügung gestellt und über das IP-orientierte Netz IPN an die entsprechende lokale Datenverarbeitungseinrichtungen DV1,...,DVn übermittelt. Eine derartige Struktur wird in der Literatur als Client-Server-Architektur bezeichnet.

Für eine Bereitstellung der für das erfindungsgemäße Verfahren notwendigen Informationen weist der Server S eine Datenbasis DB auf, aus der die zweite Anwendung CP-A die notwendigen Informationen ausliest und diese über das IP-orientierte Netz IPN an eine die Information anfordernde erste Anwendung B übermittelt. In der Datenbasis DB sind dabei für jede an einer der ersten Anwendungen B auswählbaren personenbezogenen Fähigkeit F1,...,F1 Datensätze DS1,...,DSm gespeichert, wobei jeder Datensatz DS1,...,DSm eine Kategorie K von zu einer Fähigkeit F1,...,F1 auswählbaren Kompetenz-bildenden Maßnahmen M repräsentiert. In jedem Datensatz DS1,...,DSm ist dabei zumindest eine Kompetenz-bildende Maßnahme M1,M2,... gespeichert.

Das erfindungsgemäße Verfahren wird nachfolgend anhand von - an einer Anzeigeeinrichtung einer Datenverarbeitungseinrichtung DV1,...,DVn anzeigbaren - Darstellungen mit für das Verfahren wesentlichen Verfahrensschritten bzw. Auswahlmöglichkeiten weiter veranschaulicht. Als erste Anwendung B wird im vorliegenden Ausführungsbeispiel der bekannte Webbrowser "Netscape" unter dem Betriebssystem "Windows" verwendet. Ein Zugriff der ersten Anwendung B auf die zweite Anwendung CP-A erfolgt dabei durch eine Eingabe einer die zentrale Anwendung CP-A eindeutig identifizierende Adresse: "http://competence-e-pilot.sqt.siemens.de/index.html" in ein Adressenfeld AF der ersten Anwendung B. Einem Benutzer werden durch den Webbrowser zwei Rahmen R1, R2 angezeigt, wobei im ersten Rahmen R1 eine Auswahl eines gewünschten Verfahrensschrittes - beispielsweise die Auswahl von personenbezogenen Fähigkeiten - erfolgt und im zweiten Rahmen R2 in Abhängigkeit des im ersten Rahmen R1 ausgewählten Verfahrensschrittes für den Verfahrensschritt relevante Informationen angezeigt werden.

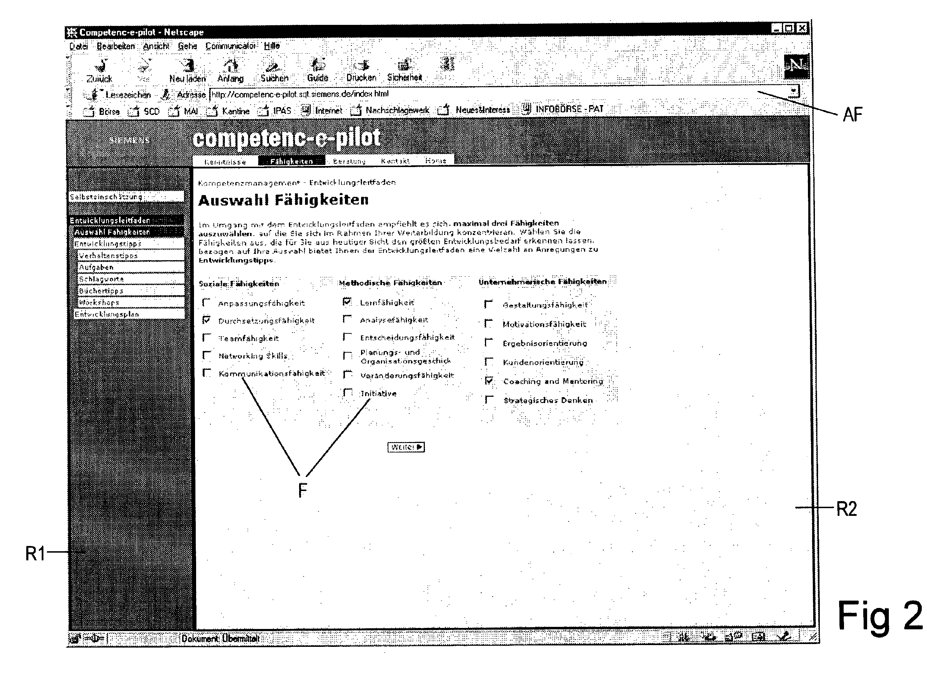

Fig. 2 zeigt ein Windows-Fenster für eine durch die erste Anwendung B unter Zugriff auf die zweite Anwendung CP-A visualisierte Auswahl von personenbezogenen Fähigkeiten F. Hierzu ist durch einen Benutzer im ersten Rahmen R1 der Verfahrensschritt "Auswahl Fähigkeiten" (dunkel hinterlegt) ausgewählt.

Infolge der Auswahl des Verfahrensschrittes "Auswahl Fähigkeiten" im ersten Rahmen werden durch die erste Anwendung B unter Zugriff auf die zweite Anwendung CP-A - bzw. die Datenbasis DB - auswählbare personenbezogene Fähigkeiten F an einer Anzeigeeinrichtung der jeweiligen, die Information anfordernden lokalen Datenverarbeitungseinrichtung DV1,...,DVn angezeigt. Zur besseren Übersichtlichkeit sind die personenbezogenen Fähigkeiten F in drei Klassen "Soziale Fähigkeiten", "Methodische Fähigkeiten" und "Unternehmerische Fähigkeiten" eingeteilt. Die dargestellten personenbezogenen Fähigkeiten F sind dabei, z.B. durch ein Anklicken mit einer Computermaus, einzeln auswählbar. Ausgewählte personenbezogene Fähigkeiten F werden durch einen dargestellten Hacken in einem der jeweiligen ausgewählten personenbezogenen Fähigkeit F zugeordneten Feld markiert. Beim vorliegenden Ausführungsbeispiel sind die personenbezogenen Fähigkeiten F "Durchsetzungsfähigkeit", "Lernfähigkeit" und "Coaching und Mentoring" durch einen Benutzer ausgewählt.

Durch die Betätigung einer Schaltfläche "Weiter" oder alternativ durch die Auswahl eines Verfahrensschrittes "Entwicklungstips" im ersten Rahmen R1 gelangt ein Benutzer zu einem weiterführenden Windows-Fenster, durch welches eine Auswahlmöglichkeit von Kompetenz-bildenden Maßnahmen M in Abhängigkeit der im Verfahrensschritt "Auswahl Fähigkeiten" ausgewählten personenbezogenen Fähigkeiten F bereitgestellt wird.

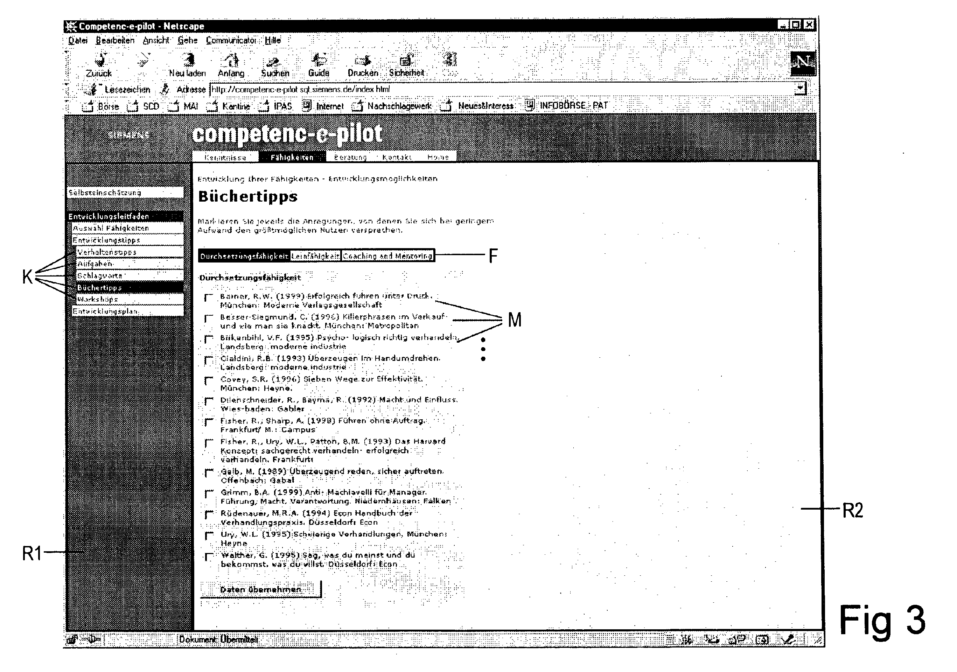

Fig. 3 zeigt ein Windows-Fenster für eine durch die erste Anwendung B unter Zugriff auf die zweite Anwendung CP-A bereitgestellte Auswahl von Kompetenz-bildenden Maßnahmen M in Abhängigkeit der ausgewählten personenbezogenen Fähigkeiten F. Hierbei werden im zweiten Rahmen R2 die zuvor ausgewählten personenbezogenen Fähigkeiten F dargestellt. Im vorliegenden Ausführungsbeispiel sind dies die personenbezogenen Fähigkeiten F "Durchsetzungsfähigkeit", "Lernfähigkeit" und "Coaching und Mentoring". Für einen Benutzer besteht nun die Möglichkeit zwischen den zuvor ausgewählten personenbezogenen Fähigkeiten F umzuschalten, wobei aktuell die personenbezogene Fähigkeit F "Durchsetzungsfähigkeit" (dunkel hinterlegt) ausgewählt ist.

Im ersten Rahmen R1 kann nun eine Auswahl zwischen unterschiedlichen Kategorien K getroffen werden, in welche die Kompetenz-bildenden Maßnahmen M untergliedert sind. Eine Kategorie entspricht dabei jeweils einem in der Datenbasis DB des Servers S gespeicherten Datensatzes DS1,...,DSm, wobei für die einzelnen auswählbaren personenbezogenen Fähigkeiten F unterschiedliche Datensätze DS1,...,DSm zur Verfügung stehen. Nach einer erfolgten Auswahl einer personenbezogenen Fähigkeit F und einer Kategorie K wird eine diese Information enthaltende Abfragenachricht von der ersten Anwendung B an die zweite Anwendung CP-A über das IP-orientierte Netz IPN übermittelt. Die zweite Anwendung CP-A liest mittels dieser Information den entsprechenden, die Kompetenz-bildenden Maßnahmen M umfassenden Datensatz DS1,...,DSm aus der Datenbasis DB aus und übermittelt diesen über das IP-orientierte Netz IPN an die zweite Anwendung B zurück, durch welche die entsprechenden Kompetenz-bildenden Maßnahmen M im zweiten Rahmen R2 des entsprechenden Windows-Fensters angezeigt werden.

Im vorliegenden Ausführungsbeispiel sind die Kompetenz-bildenden Maßnahmen M in die Kategorien K "Verhaltenstipps", "Aufgaben", "Schlagworte", "Büchertipps" und "Workshops" eingeteilt, wobei aktuell die Kategorie K "Büchertipps" (dunkel hinterlegt) ausgewählt ist. In Abhängigkeit der im zweiten Rahmen R2 ausgewählten Fähigkeit F "Durchsetzungsvermögen" und der im ersten Rahmen R1 ausgewählten Kategorie K "Büchertips" werden nun durch die erste Anwendung B unter Zugriff auf die zweite Anwendung CP-A auswählbare Kompetenz-bildende Maßnahmen M im zweiten Rahmen R2 angezeigt, wobei für die ausgewählte Kombination aus personenbezogener Fähigkeit F und Kategorie K insgesamt 13 Kompetenz-bildende Maßnahmen M zur Verfügung stehen.

Die dargestellten Kompetenz-bildenden Maßnahmen M sind dabei wiederum, z.B. durch ein Anklicken mit einer Computermaus, einzeln auswählbar. Ausgewählte Kompetenz-bildenden Maßnahmen M werden durch einen dargestellten Hacken in einem der jeweiligen ausgewählten Kompetenz-bildenden Maßnahme M zugeordneten Feld markiert. Beim vorliegenden Ausführungsbeispiel sind keine Kompetenz-bildenden Maßnahmen M ausgewählt.

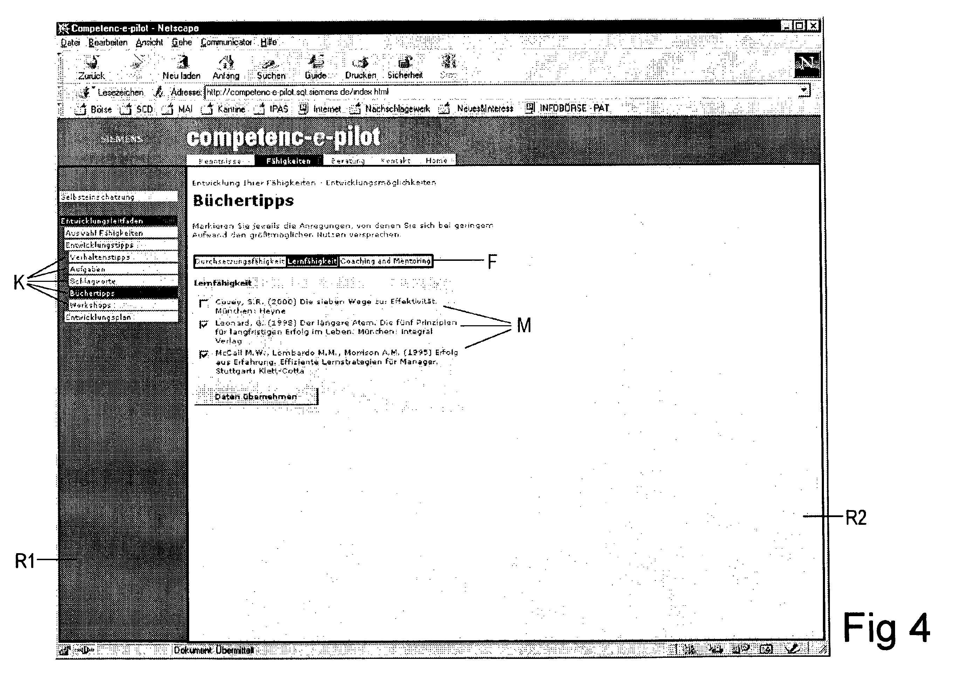

Fig. 4 zeigt ein Windows-Fenster für eine durch die erste Anwendung B unter Zugriff auf die zweite Anwendung CP-A bereitgestellte weitere Auswahl von Kompetenz-bildenden Maßnahmen M, wobei im zweiten Rahmen R2 alternativ die Fähigkeit F "Lernfähigkeit" und im ersten Rahmen R1 wiederum die Kategorie K "Büchertips" ausgewählt sind.

Für die ausgewählte Kombination aus personenbezogener Fähigkeit F und Kategorie K stehen in diesem Fall 3 Kompetenz-bildende Maßnahmen M zur Verfügung, wobei durch einen Benutzer die zweite und die dritte dargestellte Kompetenz-bildende Maßnahme M in der oben beschriebenen Weise ausgewählt sind. Durch eine Betätigung einer Schaltfläche "Daten übernehmen" werden die ausgewählten Kompetenz-bildenden Maßnahmen M für einen späteren Aufruf zwischengespeichert. Ein Aufruf der zwischengespeicherten Kompetenz-bildenden Maßnahmen M erfolgt durch den Verfahrensschritt "Entwicklungsplan" im ersten Rahmen R1. Mittels dieses Verfahrensschrittes werden einem Benutzer alle zuvor ausgewählten Kompetenz-bildenden Maßnahmen M in Abhängigkeit der Zugehörigkeit zu einer personenbezogenen Fähigkeit F und einer Kompetenz K entsprechend aufgeschlüsselt angezeigt, so daß der Benutzer eine übersichtliche Darstellung des individuell für ihn zusammengestellten Maßnahmenkatalogs erhält.

## Patentansprüche

1. Verfahren zur Ermittlung von Kompetenz-bildenden Maßnahmen (M) ,
bei dem durch eine auf einer Datenverarbeitungseinrichtung (DV1,...,DVn) ablaufenden Anwendung (B) unter Zugriff auf eine mit der Datenverarbeitungseinrichtung (DV1, ...,DVn) über ein IP-orientiertes Netz (IPN) verbundene zentrale Datenverarbeitungseinrichtung (S) eine Mehrzahl von personenbezogenen Fähigkeiten (F) zur Auswahl bereitgestellt werden,
bei dem bei einer erfolgten Auswahl von zumindest einer Fähigkeit (F) durch die zentrale Datenverarbeitungseinrichtung (S) in Abhängigkeit der ausgewählten Fähigkeiten (F) Datensätze (DS1,...,DSm) mit den Fähigkeiten (F) zugeordneten Kompetenz-bildenden Maßnahmen (M) automatisch ausgewählt und der Anwendung (B) zur Verfügung gestellt werden.

2. Verfahren gemäß Anspruch 1,
**dadurch gekennzeichnet,**
**daß** die Kompetenz-bildenden Maßnahmen (M) jeweils in unterschiedliche Kategorien (K) eingeteilt werden, wobei den einer Fähigkeit (F) zugeordneten unterschiedlichen Kategorien (K) jeweils ein Datensatz (DS1,...,DSm) zugeordnet wird.

3. Verfahren gemäß Anspruch 1 oder 2,
**dadurch gekennzeichnet,**
**daß** in den jeweiligen der Anwendung (B) zur Verfügung gestellten Datensätzen (DS1,...,DSm) jeweils einzelne Kompetenz-bildende Maßnahmen (M) einzeln auswählbar sind, wobei die ausgewählten Kompetenz-bildende Maßnahmen (M) zwischengespeichert werden.

4. Verfahren gemäß Anspruch 3,
**dadurch gekennzeichnet,**
**daß** die zwischengespeicherten Kompetenz-bildenden Maßnahmen (M) in Abhängigkeit der Kategorie (K) und der Fähigkeit (F) der sie zugeordnet sind in einer Datei zusammengefaßt und durch die Anwendung (B) angezeigt werden.

5. Einrichtung (DV1,...,DVn) zur Ermittlung von Kompetenz-bildenden Maßnahmen (M),
mit einer auf der Einrichtung (DV1,...,DVn) ablaufenden Anwendung (B) durch die unter Zugriff auf eine mit der Einrichtung (DV1,...,DVn) über ein IP-orientiertes Netz (IPN) verbundenen zentralen Datenverarbeitungseinrichtung (S)
- eine Mehrzahl von personenbezogenen Fähigkeiten (F) auswählbar sind, und
- nach einer erfolgten Auswahl in Abhängigkeit der ausgewählten Fähigkeiten (F) Datensätze (DS1,...,DSm) mit den Fähigkeiten (F) zugeordneten Kompetenz-bildenden Maßnahmen (M) zur Verfügung gestellt werden.

6. Einrichtung (DV1,...,DVn) gemäß Anspruch 5,
**dadurch gekennzeichnet,**
**daß** die Einrichtung ein Personal Computer ist.

7. Einrichtung (DV1,...,DVn) gemäß Anspruch 5 oder 6,
**dadurch gekennzeichnet,**
**daß** die Anwendung (B) ein Webbrowser ist.
